# EUROPÄISCHE PATENTSCHRIFT

(11) **EP 2 828 515 B1**
(45) Veröffentlichungstag und Bekanntmachung des Hinweises auf die Patenterteilung: **26.04.2017**
(21) Anmeldenummer: 13703601.8
(22) Anmeldetag: 12.02.2013
(51) Int. Cl.: F02M 55/00, F16L 3/10, F16L 21/00, F02M 63/00

(54) **DICHT UMSPRITZTES BAUELEMENT UND VERFAHREN ZUM HERSTELLEN EINES SOLCHEN BAUELEMENTS**
TIGHTLY OVERMOULDED COMPONENT AND METHOD FOR PRODUCING SUCH A COMPONENT
ELÉMENT DE CONSTRUCTION ENROBÉ DE MANIÈRE ÉTANCHE ET PROCÉDÉ DE FABRICATION D'UN TEL ÉLÉMENT DE CONSTRUCTION

(30) Priorität: 19.03.2012 DE 102012204310
(43) Veröffentlichungstag der Anmeldung: 28.01.2015
(73) Patentinhaber: Robert Bosch GmbH, 70442 Stuttgart (DE)
(72) Erfinder: KROMER, Ralf, 71665 Vaihingen An Der Enz (DE)
(86) Internationale Anmeldenummer: PCT/EP2013/052733
(87) Internationale Veröffentlichungsnummer: WO 2013/139531

(56) Entgegenhaltungen:
- DE-A1-102008 043 690
- DE-A1-102009 002 909

## Beschreibung

### Stand der Technik

Die vorliegende Erfindung betrifft ein Bauelement, das mit einem weiteren Werkstoff umspritzt ist. Weiterhin betrifft die Erfindung ein Verfahren zum Fertigen eines umspritzten Bauelements sowie eine Kraftstoffeinspritzvorrichtung für eine Verbrennungskraftmaschine, die ein erfindungsgemäßes umspritztes Bauteil umfasst.

Aus dem Stand der Technik sind insbesondere metallische Basisteile bekannt, die mit einem Kunststoff umspritzt werden. Durch die unterschiedlichen Ausdehnungskoeffizienten von Basisteil und Umspritzung ergibt sich jedoch häufig eine unzureichende Verankerung der Umspritzung an dem Basisteil. Somit entstehen Mikrospalte, in die, gefördert durch die Kapillarwirkung, flüssige oder gasförmige Medien eintreten können. Diese Undichtigkeit kann daher zu unerwünschten Korrosionserscheinungen führen. Es sind weiter aus dem Stand der Technik Bemühungen bekannt, die die Dichtigkeit zwischen Basisteil und Umspritzung zu verbessern versuchen. Hierfür kann z.B. ein Dichtlabyrinth verwendet werden, in dem in das Basisteil ein oder mehrere Ausnehmungen eingebracht werden, die während der Umspritzung von dem umspritzten Kunststoff ausgefüllt werden. Jedoch hat sich auch diese Technik als nicht ausreichend dicht erwiesen.

Kraftstoffeinspritzvorrichtungen mit Bauelementen, die mit einem weiteren Werkstoff umspritzt sind, sind beispielsweise aus der DE 10 2008 043 690 A1 und aus der DE 10 2009 002 909 A1 bekannt.

Es ist jedoch gerade bei Bauelementen, die häufigen und großen Temperaturschwankungen unterliegen, wünschenswert, dass die Umspritzung dicht an dem Basisteil anliegt.

### Offenbarung der Erfindung

Das erfindungsgemäße Bauelement mit den Merkmalen des Anspruchs 1 umfasst ein Basisteil und ein Dichtungselement. Dabei ist das Dichtungselement auf einer Oberfläche des Basisteils angebracht. Weiterhin umfasst das Bauelement eine Umspritzung, die sich zumindest teilweise um das Basisteil und zumindest teilweise um das Dichtungselement erstreckt. Die Dichtigkeit zwischen dem Basisteil und der Umspritzung wird dadurch gewährleistet, dass die Umspritzung das Dichtungselement in einem elastisch verformten Zustand hält. Somit wird das Dichtungselement zwischen Basisteil und Umspritzung verformt und eingeklemmt, wodurch eine hohe Dichtigkeit zwischen der Umspritzung und dem Basisteil erreicht wird. Weiterhin wird von dem erfindungsgemäßen Bauelement die Dichtigkeit auch bei Temperaturschwankungen oder Relativbewegungen zwischen Basisteil und Dichtungselement gewährleistet.

Erfindungsgemäß bildet das Dichtungselement zusammen mit dem Basisteil einen abgeschlossenen Raum. Innerhalb dieses Raumes befindet sich ein Gas, das insbesondere komprimiert ist. Der Druck des komprimierten Gases wirkt dabei zusätzlich auf das Dichtungselement, was sich wiederum positiv auf die Dichtigkeit auswirkt. Daher wird die Robustheit der Dichtung gegenüber Temperaturschwankungen oder sonstige sich ändernde Umgebungseinflüsse weiter erhöht. Dazu ist der Raum derart ausgestaltet, dass sich das Dichtungselement bei Temperaturschwankungen oder bei Änderung von Umgebungseinflüssen entsprechend elastisch verformen kann, um weiterhin die Dichtigkeit zu gewährleisten. Insbesondere ist der Raum derart ausgestaltet, dass die Umspritzung nicht in diesen Raum eindringt.

Die Unteransprüche zeigen bevorzugte Weiterbildungen der Erfindung.

Besonders bevorzugt weist das Basisteil eine Ausnehmung auf, die von dem Dichtungselement abgedeckt ist. Auf diese Weise entsteht der abgeschlossene Raum zwischen Dichtungselement und Basisteil. Der Fertigungsaufwand für diese Ausführungsform ist sehr gering, da eine Ausnehmung einfach zu fertigen ist. Das Dichtungselement muss lediglich groß genug sein, um die Ausnehmung abzudecken.

Alternativ ist bevorzugt vorgesehen, dass das Dichtungselement eine Topfform oder eine Schalenform mit einer Öffnung aufweist. Diese Öffnung wird von dem Basisteil abgedeckt. Im Gegensatz zu der vorherigen Ausführungsform, bei der der Raum innerhalb des Basisteils lag und von dem Dichtungselement abgedeckt wurde, liegt nun der Raum innerhalb des Dichtungselements und wird von dem Basisteil abgedeckt. Daher können die Anforderungen an die Form des Basisteils gesenkt werden. Es muss lediglich eine Oberfläche aufweisen, die groß genug ist, die Öffnung der Topfform oder der Schalenform abzudecken.

Bei einer dritten besonders bevorzugten Alternative weist das Basisteil zwei zueinander abgewinkelte Oberflächen auf. Das Dichtungselement erstreckt sich dabei zwischen den abgewinkelten Oberflächen, so dass dadurch der Raum zwischen Basisteil und Dichtungselement entsteht. Diese Variante ist vor allem dann sinnvoll, wenn bereits vorhandene Stellen mit abgewinkelten Oberflächen am Basisteil vorhanden sind. In diesem Fall kann das Dichtungselement einfach und aufwandsarm an einer solchen Stelle angebracht werden.

In einer vorteilhaften Ausführungsform der Erfindung ist das Basisteil und/oder das Dichtungselement vollständig von der Umspritzung umgeben. Die vollständige Umspritzung des Dichtungselements ermöglicht eine maximale elastische Verformung, so dass eine sehr hohe Dichtigkeit zwischen Umspritzung und Basisteil erreicht wird. Die vollständige Umspritzung des Basisteils bewirkt beispielsweise einen erhöhten Korrosionsschutz des Basisteils.

Als eine alternativ bevorzugte Ausführungsform der Erfindung wird das Dichtungselement an zwei zueinander abgewinkelten Oberflächen des Basisteils angelegt. Das Anlegen erfolgt dabei durchgängig, so dass kein Raum zwischen Dichtungselement und Basisteil entsteht. Die Dichtwirkung beruht in diesem Fall allein auf der Rückstellkraft der elastischen Verformung des Dichtungselements, die sowohl auf die Umspritzung als auch auf das Basisteil wirkt. Die so erreichte Dichtigkeit zwischen Basisteil und Umspritzung ist dabei im Wesentlichen genauso groß wie die Dichtigkeit bei den zuvor genannten Ausführungsformen.

Das Dichtelement ist bevorzugt ringförmig, vorzugsweise mit rechteckigem Querschnitt im unverformten Zustand. Bevorzugt besteht das Basisteil aus einem metallischen Werkstoff, während die Umspritzung bevorzugt aus einem Kunststoff besteht.

Die Erfindung betrifft weiterhin ein Verfahren zum Herstellen eines umspritzten Bauelements gemäß Anspruch 7, das die folgenden Schritte umfasst: Zunächst wird ein Basisteil und ein Dichtungselement bereitgestellt, wobei anschließend das Dichtungselement an dem Basisteil angebracht wird. Schließlich wird das Basisteil und das Dichtungselement zumindest teilweise mit einem weiteren Werkstoff umspritzt. Zusätzlich wird durch dieses Umspritzen das Dichtungselement elastisch verformt und von der Umspritzung in dieser Verformung gehalten. Auf diese Weise wird ein umspritztes Bauelement erzeugt, das eine hohe Dichtigkeit zwischen Basisteil und Umspritzung aufweist. Die Dichtigkeit wird durch das Dichtungselement gewährleistet, das elastisch verformt und damit verspannt ist und somit eine Druckkraft sowohl auf die Umspritzung als auch auf das Basisteil aufbringt.

Das Verfahren wird durchgeführt, indem das Anbringen des Dichtungselements an dem Basisteil derart geschieht, dass ein abgeschlossener Raum zwischen Basisteil und Dichtungselement entsteht. In diesem Raum eingeschlossen befindet sich ein Gas, das durch die elastische Verformung des Dichtungselements während des Umspritzens komprimiert wird. Daher übt das komprimierte Gas eine zusätzliche Kraft auf das Dichtungselement aus, was die Dichtigkeit zwischen Basisteil und Umspritzung weiter erhöht. Der Raum ist dabei derart ausgebildet, dass während des Umspritzens kein flüssiger Werkstoff in den abgeschlossenen Raum gelangen kann. Weiterhin ist der Raum derart ausgebildet, dass das Dichtungselement bei Temperaturschwankungen oder sich ändernden Umgebungseinflüssen weiter elastisch verformt werden kann. Auf diese Weise wird die Dichtigkeit zwischen Basisteil und Umspritzung auch bei Temperaturschwankungen oder bei sich ändernden Umgebungseinflüssen gewährleistet.

Alternativ wird das erfindungsgemäße Verfahren bevorzugt durchgeführt, indem das Dichtungselement an zwei zueinander abgewinkelten Oberflächen des Basisteils angelegt wird. Das Anlegen erfolgt dabei durchgängig, so dass kein Raum zwischen Basisteil und Dichtungselement gebildet wird. Während des Umspritzens wird ein Spritzwerkzeug verwendet, das einen Hohlraum aufweist, in den das Dichtungselement während des Umspritzens gedrückt wird. In dieser elastischen Verformung wird das Dichtungselement von der Umspritzung schließlich gehalten. Bei diesem Verfahren wird auf die Bildung eines mit komprimiertem Gas gefüllten Raumes verzichtet, so dass die Dichtigkeit zwischen Basisteil und Umspritzung lediglich durch die aus der elastischen Verformung resultierenden Rückstellkraft des Dichtungselements erzeugt wird. Dabei ist die Durchführung dieses Verfahrens sehr einfach und aufwandsarm.

Weiterhin betrifft die Erfindung eine Kraftstoffeinspritzvorrichtung für eine Verbrennungskraftmaschine. Diese Kraftstoffeinspritzvorrichtung umfasst ein erfindungsgemäßes Bauelement, wie es in den vorherstehenden Absätzen beschrieben wurde.

### Kurze Beschreibung der Zeichnungen

Nachfolgend werden Ausführungsbeispiele der Erfindung unter Bezugnahme auf die begleitende Zeichnung im Detail beschrieben, wobei gleiche bzw. funktional gleiche Bauteile mit den gleichen Bezugszeichen versehen sind. In der Zeichnung ist:
- Figur 1: eine Schnittansicht eines Bauelements gemäß einer ersten Ausführungsform der Erfindung vor dem Umspritzen,
- Figur 2: eine Schnittansicht des Bauelements gemäß einer zweiten Ausführungsform der Erfindung nach dem Umspritzen,
- Figur 3: eine Schnittansicht eines Bauelements gemäß einer zweiten Ausführungsform der Erfindung vor dem Umspritzen,
- Figur 4: eine Schnittansicht des Bauelements gemäß einer zweiten Ausführungsform der Erfindung nach dem Umspritzen,
- Figur 5: eine Schnittansicht des Bauelements gemäß einer dritten Ausführungsform der Erfindung vor dem Umspritzen,
- Figur 6: eine Schnittansicht des Bauelements gemäß der dritten Ausführungsform der Erfindung nach dem Umspritzen,
- Figur 7: eine Schnittansicht eines Bauelements nicht gemäß der Erfindung während des Vorgangs des Umspritzens und ein dafür verwendetes Werkzeug, und
- Figur 8: eine Schnittansicht des Bauelements nicht gemäß der Erfindung nach dem Umspritzen, und
- Figur 9: eine schematische Ansicht eines Einspritzventils, das ein erfindungsgemäßes Bauelement gemäß einem der bevorzugten Ausführungsformen umfasst.

### Ausführungsformen der Erfindung

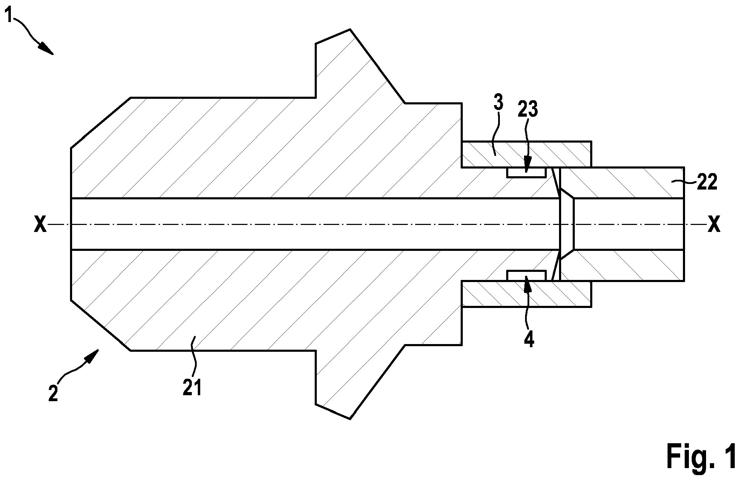

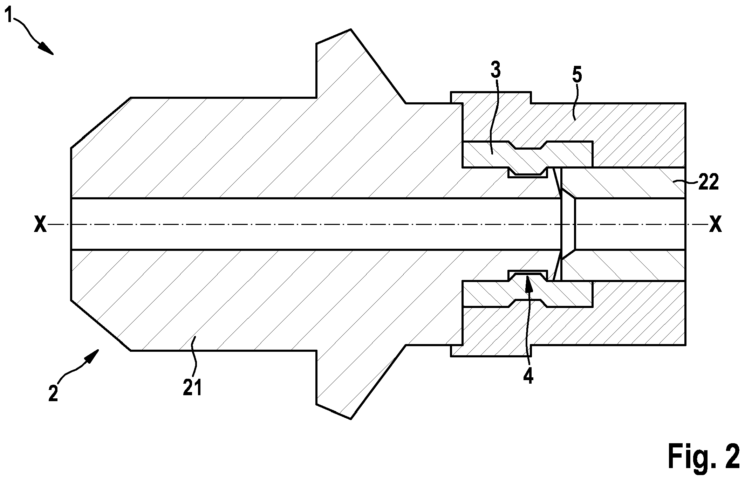

Die Figuren 1 und 2 sind eine Schnittansicht des erfindungsgemäßen Bauelements 1 gemäß einer ersten Ausführungsform. Figur 1 zeigt das Bauelement 1 vor dem Anbringen einer Umspritzung 5, Figur 2 das Bauelement 1 nach dem Anbringen der Umspritzung 5. Aus Figur 1 ist ersichtlich, dass ein abgeschlossener ringförmiger Raum 4 durch eine Ausnehmung 23 innerhalb eines zweistückigen Basiselements 2, das einen ersten Teil 21 und einen zweiten Teil 22 umfasst, gebildet wird. Über diese Ausnehmung 23 wird ein Dichtungselement 3 gelegt, das den Raum 4 von der Umgebung abkapselt. Somit stellt das Dichtungselement 3 sicher, dass keine Schmelze während des Umspritzens in den Raum 4 gelangen kann. Figur 2 zeigt das Bauelement 1, nachdem die Umspritzung 5 aufgebracht wurde. Es ist erkennbar, dass sich das Dichtungselement 3 durch die Umspritzung 5 elastisch verformt hat. Da das Dichtungselement 3 dabei in den Raum 4 eindringt, wird das sich darin befindliche Gas komprimiert. Auf diese Weise wird das Dichtungselement 3 weiter verspannt, so dass es eine robuste Abdichtung zwischen Basisteil 2 und Umspritzung 5 bildet. Jedoch dringt das Dichtungselement 3 nicht vollständig in den Raum 4 ein, so dass auch weiterhin, z.B. bei Temperaturschwankungen, eine elastische Verformung des Dichtungselements 3 in den verbleibenden Restraum möglich ist.

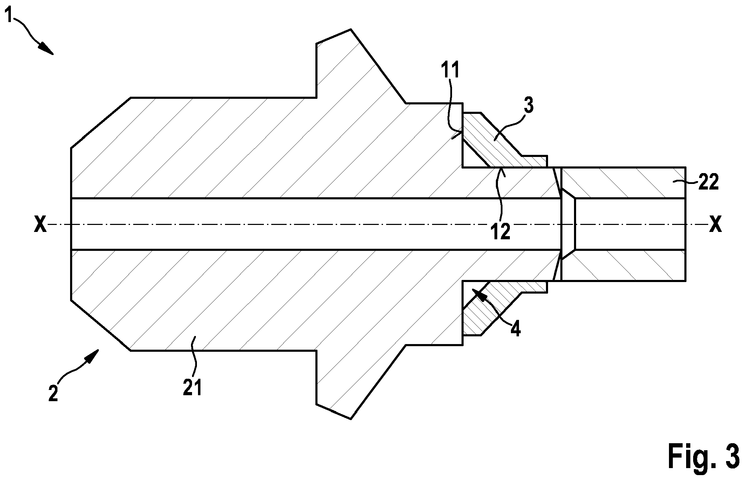

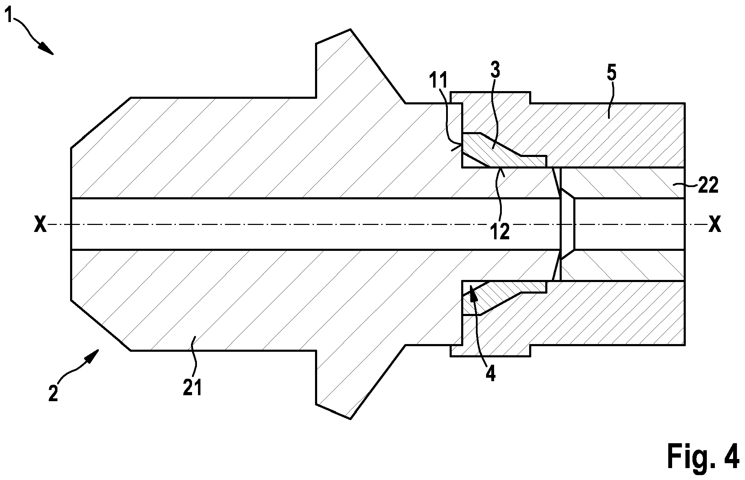

Die Figuren 3 und 4 zeigen eine Schnittansicht des erfindungsgemäßen Bauelements 1 gemäß einer zweiten Ausführungsform. Figur 3 zeigt das Bauelement 1 vor dem Umspritzen, Figur 4 zeigt das Bauelement 1 nach dem Anbringen einer Umspritzung 5. Figur 3 zeigt, dass das Bauelement 1 zwei zueinander abgewinkelte Oberflächen aufweist. Eine erste Oberfläche 11 steht senkrecht auf einer zweiten Oberfläche 12. Ein Dichtungselement 3 erstreckt sich von der ersten Oberfläche 11 zu der zweiten Oberfläche 12. Dabei wird ein abgeschlossener ringförmiger Raum 4 zwischen dem Dichtungselement 3 und dem Basisteil 2 gebildet. Auch hier schließt das Dichtungselement 3 den Raum 4 ab, so dass dieser gegenüber der Umgebung gekapselt ist. Insbesondere kann keine Schmelze während des Umspritzvorgangs in diesen Raum eindringen. Außerdem kann kein Gas aus dem Raum 4 ausdringen. Figur 4 zeigt das Bauelement 1 nach dem Anbringen einer Umspritzung 5. Analog zur ersten Ausführungsform wurde durch die Umspritzung 5 das Bauteil 3 elastisch verformt, so dass das sich in dem Raum 4 befindliche Gas komprimiert wurde. Damit wird auch hier das Dichtungselement sowohl durch die elastische Verformung als auch durch den Druck des komprimierten Gases innerhalb des Raumes 4 verspannt, so dass eine Dichtigkeit zwischen Basisteil 2 und Umspritzung 5 gewährleistet ist. In dieser Ausführungsform muss das Basisteil 2 nicht weiter bearbeitet werden, insbesondere muss es keine Ausnehmungen aufweisen, da auf vorhandene abgewinkelte Oberflächen 11 und 12 zurückgegriffen wird.

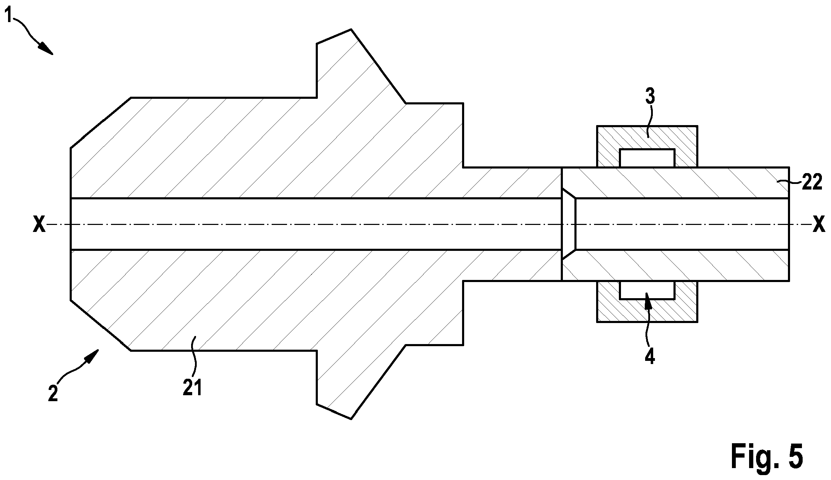

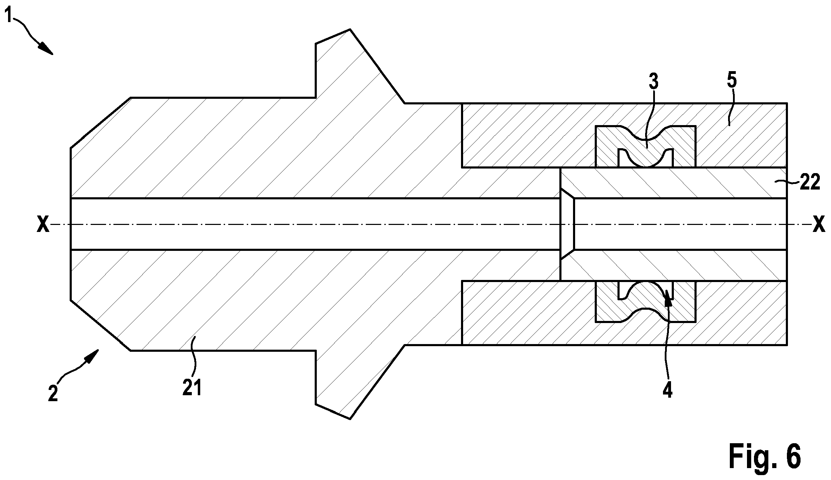

Die Figuren 5 und 6 zeigen eine Schnittansicht des erfindungsgemäßen Bauteils 1 gemäß einer dritten Ausführungsform. Figur 5 zeigt das Bauelement 1 vor dem Umspritzen, Figur 6 zeigt das Bauelement 1 nach Anbringen einer Umspritzung 5. In Figur 5 ist gezeigt, dass in diesem Ausführungsbeispiel das ringförmige Dichtungselement 3 im Schnitt eine Topfform aufweist, deren Öffnung von dem Basisteil 2 abgedeckt wird. Die Öffnung ist an einem inneren Umfang des Dichtungselements 3 vorgesehen. Somit wird ein Raum 4 innerhalb des Dichtungselements 3 gebildet, was die konstruktiven Anforderungen an das Basisteil 2 nochmals senkt. Auch hier wird durch das Dichtungselement 3 sichergestellt, dass während des Umspritzens keine Schmelze in den Raum 4 eindringen kann, und kein Gas aus dem Raum 4 ausdringen kann. Figur 6 zeigt das Bauelement 1 nach dem Anbringen der Umspritzung 5. Auch hier wurde das Dichtungselement 3 elastisch verformt, so dass das sich im Raum 4 befindliche Gas komprimiert wurde. Es ergibt sich die gleiche Funktionalität wie bei den ersten beiden Ausführungsbeispielen, jedoch ist ersichtlich, dass die Umspritzung 5 kompakter aufgetragen werden kann. Außerdem wird in dieser Ausführungsform als einzige Bedingung an das Basisteil gestellt, dass es eine Oberfläche aufweist, die groß genug ist, die Öffnung des Dichtungselements 3 abzudecken.

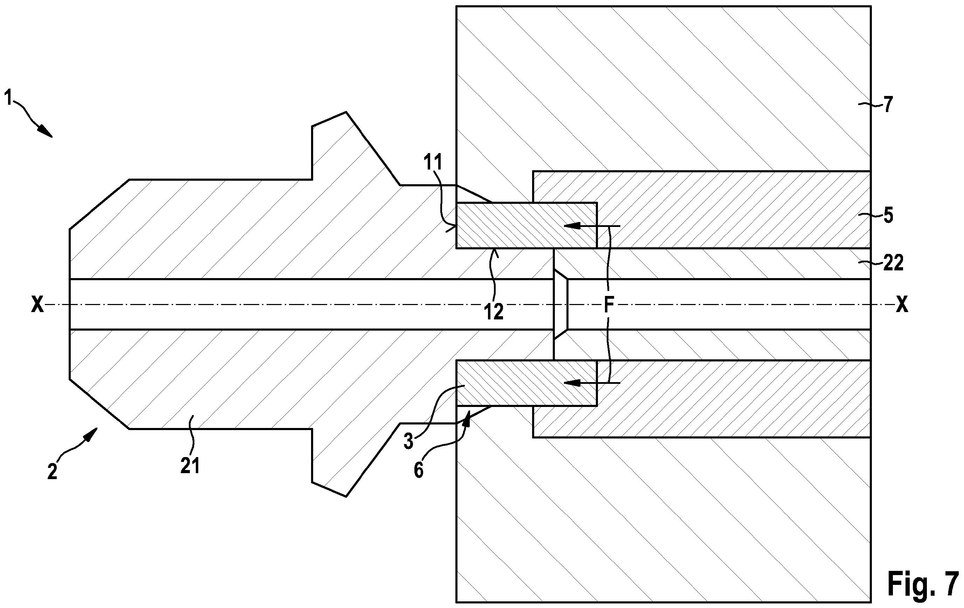

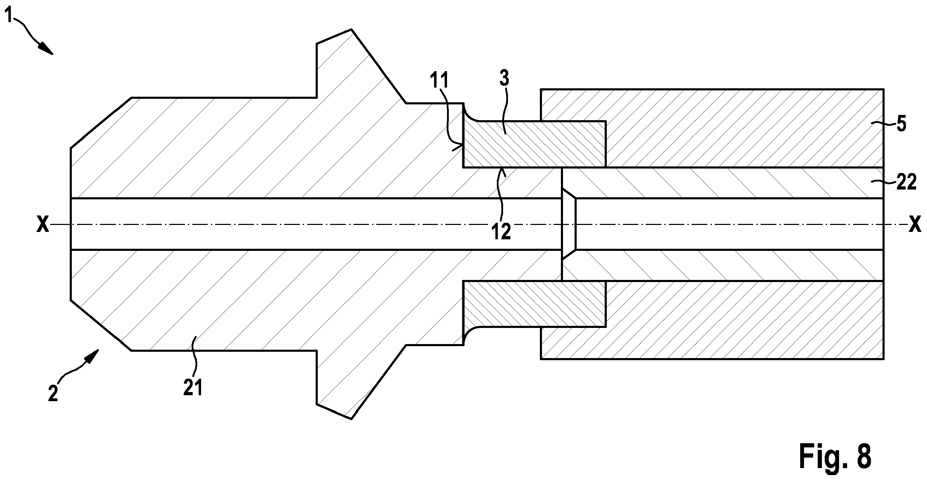

Die Figuren 7 und 8 zeigen eine Schnittansicht des Bauelements 1 nicht gemäß der Erfindung. Figur 7 zeigt das Bauelement 1 während des Umspritzvorgangs, Figur 8 zeigt das Bauelement 1 nach dem Umspritzvorgang. Aus Figur 7 ist ersichtlich, dass während des Umspritzens des Basisteils 2 mit einer Umspritzung 5 ein Spritzwerkzeug 7 verwendet wird. Das Spritzwerkzeug 7 liegt dabei an dem Dichtungselement 3 auf, so dass dieses nur teilweise umspritzt wird. Das Dichtungselement 3 liegt wiederum an der ersten Oberfläche 11 und der zweiten Oberfläche 12 des Basisteils 2 an, jedoch ohne einen Raum zwischen Dichtungselement und Basisteil zu bilden. Damit sich das Dichtungselement 3 dennoch während des Umspritzvorgangs elastisch verformen kann, weist das Spritzwerkzeug 7 einen Hohlraum 6 auf, in den das Dichtungselement 3 während der Anbringung der Umspritzung 5 gedrückt wird. Das Ergebnis ist in Figur 8 zu sehen. Es ist ersichtlich, dass das Dichtungselement 3 in axialer Richtung X-X zwischen der Umspritzung 5 und dem Basisteil 2 durch die während des Umspritzens aufgebrachte Kraft F eingespannt ist. Somit erzeugt eine Rückstellkraft, die aus der elastischen Verformung des Dichtungselements 3 resultiert, eine Druckkraft sowohl auf das Basisteil 2 als auch auf die Umspritzung 5. Damit wird eine sichere Abdichtung von Umspritzung 5 zu Basisteil 2 realisiert.

Da in dieser Form das Dichtungselement 3 in axialer Richtung X-X nur teilweise umspritzt ist, ist es diesem auch nach dem Anbringen der Umspritzung 5 weiterhin möglich, sich elastisch zu verformen. Daher bietet auch diese Form eine hohe Dichtigkeit bei sich ändernden Temperatureinflüssen. Da jedoch kein Raum wie bei den Ausführungsformen vorgesehen ist, muss während des Umspritzens nicht darauf geachtet werden, dass keine Schmelze in diesen Raum eindringt. Daher wird der Aufwand für den Vorgang des Umspritzens vereinfacht.

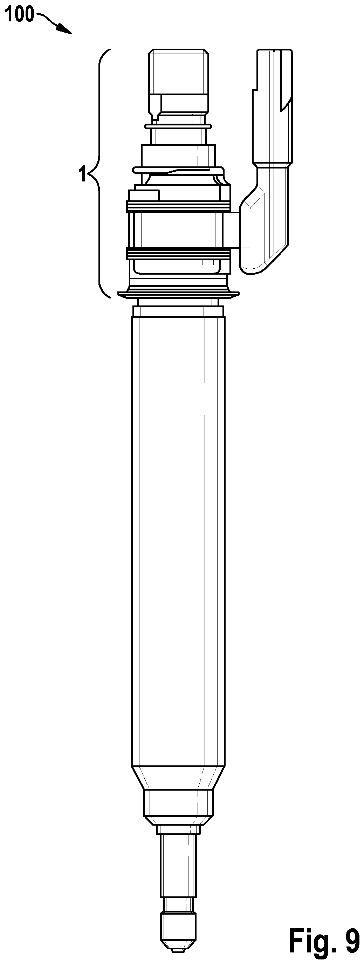

Figur 9 zeigt ein Einspritzventil 100. Dabei umfasst dieses Einspritzventil 100 ein Bauelement 1 gemäß einem der vorhergehend beschriebenen Ausführungsformen.

## Patentansprüche

1. Bauelement, umfassend:
- ein Basisteil (2),
- ein Dichtungselement (3), und
- eine Umspritzung (5), die sich zumindest teilweise um das Basisteil (2) und zumindest teilweise um das Dichtungselement (3) erstreckt, wobei die Umspritzung (5) das Dichtungselement (3) in einem elastisch verformten Zustand hält,
**dadurch gekennzeichnet, dass** das Dichtungselement (3) und das Basisteil (2) zwischen sich einen abgeschlossenen Raum (4) definieren, in dem sich ein Gas, insbesondere ein komprimiertes Gas, befindet.

2. Bauelement nach Anspruch 1, wobei das Basisteil (2) eine Ausnehmung (23) aufweist, die von dem Dichtungselement (3) abgedeckt ist, wodurch der Raum (4) zwischen Basisteil (2) und Dichtungselement (3) gebildet ist.

3. Bauelement nach Anspruch 1, wobei das Dichtungselement (3) eine Topf-oder Schalenform mit einer Öffnung aufweist und die Öffnung von dem Basisteil (2) abgedeckt ist, wodurch der Raum (4) zwischen Basisteil (2) und Dichtungselement (3) gebildet ist.

4. Bauelement nach Anspruch 1, wobei das Basisteil (2) zwei zueinander abgewinkelte Oberflächen (11, 12) aufweist und sich das Dichtungselement (3) zwischen den abgewinkelten Oberflächen (11, 12) erstreckt, wodurch der Raum (4) zwischen Basisteil (2) und Dichtungselement (3) gebildet ist.

5. Bauelement nach einem der vorherigen Ansprüche, wobei das Basisteil (2) und/oder das Dichtungselement (3) vollständig von der Umspritzung (5) umgeben ist.

6. Bauelement nach Anspruch 1, wobei das Dichtungselement (3) durchgängig an zwei zueinander abgewinkelten Oberflächen (11, 12) des Basisteils (2) anliegt.

7. Verfahren zum Herstellen eines umspritzten Bauelements (1) umfassend die Schritte:
- Bereitstellen eines Basisteils (2) und eines Dichtungselements (3),
- Anbringen des Dichtungselements (3) an dem Basisteil (2), und
- Zumindest teilweises Umspritzen von Basisteil (2) und Dichtungselement (3) mit einem weiteren Werkstoff, wobei das Dichtungselement (3) elastisch verformt wird,
**dadurch gekennzeichnet, dass** durch das Anbringen des Dichtungselements (3) an dem Basisteil (2) zwischen Basisteil (2) und Dichtungselement (3) ein abgeschlossener Raum (4) gebildet wird und ein in diesen Raum (4) eingeschlossenes Gas durch die elastische Verformung des Dichtungselements (3) während des Umspritzens komprimiert wird.

8. Verfahren nach Anspruch 7, wobei das Dichtungselement (3) durchgängig an zwei zueinander abgewinkelten Oberflächen des Basisteils (2) angelegt wird und das Dichtungselement (3) durch die elastische Verformung während des Umspritzens in einen Hohlraum (6) eines Spritzwerkzeuges (7) gedrückt wird.

9. Kraftstoffeinspritzvorrichtung für eine Verbrennungskraftmaschine, umfassend ein Bauelement nach einem der Ansprüche 1 bis 6.

## Claims

1. Component comprising:
- a base part (2),
- a sealing element (3) and
- an overmoulding (5), which extends at least partially around the base part (2) and at least partially around the sealing element (3), wherein the encapsulation (5) keeps the sealing element (3) in an elastically deformed state,
**characterized in that** the sealing element (3) and the base part (2) define a sealed space (4) between them, in which there is a gas, in particular a compressed gas.

2. Component according to Claim 1, wherein the base part (2) has a recess (23), which is covered by the sealing element (3), whereby the space (4) between the base part (2) and the sealing element (3) is created.

3. Component according to Claim 1, wherein the sealing element (3) has the shape of a cup or a bowl with an opening and the opening is covered by the base part (2), whereby the space (4) between the base part (2) and the sealing element (3) is created.

4. Component according to Claim 1, wherein the base part (2) has two surfaces (11, 12) angled away from each other and the sealing element (3) extends between the angled-away surfaces (11, 12), whereby the space (4) between the base part (2) and the sealing element (3) is created.

5. Component according to one of the preceding claims, wherein the base part (2) and/or the sealing element (3) is completely surrounded by the overmoulding (5).

6. Component according to Claim 1, wherein the sealing element (3) lies fully against two surfaces (11, 12) angled away from each other of the base part (2).

7. Method for producing an overmoulded component (1), comprising the steps of:
- providing a base part (2) and a sealing element (3),
- attaching the sealing element (3) to the base part (2), and
- at least partially overmoulding the base part (2) and the sealing element (3) with a further material, the sealing element (3) being elastically deformed,
**characterized in that** the attachment of the sealing element (3) to the base part (2) creates a sealed space (4) between the base part (2) and the sealing element (3), and a gas enclosed in this space (4) is compressed during the overmoulding by the elastic deformation of the sealing element (3).

8. The method according to Claim 7, wherein the sealing element (3) is made to lie fully against two surfaces (11, 12) angled away from each other of the base part (2) and the sealing element (3) is pressed into a cavity (6) of an injection mould (7) by the elastic deformation during the overmoulding.

9. Fuel injection device for an internal combustion engine, comprising a component according to one of Claims 1 to 6.

## Revendications

1. Élément de construction, comprenant :
- une partie de base (2),
- un élément d'étanchéité (3), et
- un surmoulage (5) qui s'étend au moins en partie autour de la partie de base (2) et au moins en partie autour de l'élément d'étanchéité (3), le surmoulage (5) maintenant l'élément d'étanchéité (3) dans un état déformé élastiquement,
**caractérisé en ce que** l'élément d'étanchéité (3) et la partie de base (2) définissent entre eux un espace fermé (4) dans lequel se trouve un gaz, en particulier un gaz comprimé.

2. Élément de construction selon la revendication 1, dans lequel la partie de base (2) présente un évidement (23) qui est recouvert par l'élément d'étanchéité (3) de sorte que l'espace (4) entre la partie de base (2) et l'élément d'étanchéité (3) soit formé.

3. Élément de construction selon la revendication 1, dans lequel l'élément d'étanchéité (3) présente une forme de pot ou une forme de coque avec une ouverture et l'ouverture est recouverte par la partie de base (2), de sorte que l'espace (4) entre la partie de base (2) et l'élément d'étanchéité (3) soit formé.

4. Élément de construction selon la revendication 1, dans lequel la partie de base (2) présente deux surfaces coudées l'une par rapport à l'autre (11, 12) et l'élément d'étanchéité (3) s'étend entre les surfaces coudées (11, 12) de sorte que l'espace (4) entre la partie de base (2) et l'élément d'étanchéité (3) soit formé.

5. Élément de construction selon l'une quelconque des revendications précédentes, dans lequel la partie de base (2) et/ou l'élément d'étanchéité (3) est/sont complètement entouré(e)(s) par le surmoulage (5).

6. Élément de construction selon la revendication 1, dans lequel l'élément d'étanchéité (3) s'applique de manière continue contre deux surfaces coudées l'une par rapport à l'autre (11, 12) de la partie de base (2).

7. Procédé de fabrication d'un élément de construction surmoulé (1), comprenant les étapes suivantes :
- fourniture d'une partie de base (2) et d'un élément d'étanchéité (3),
- montage de l'élément d'étanchéité (3) sur la partie de base (2), et
- surmoulage au moins partiel de la partie de base (2) et de l'élément d'étanchéité (3) avec un matériau supplémentaire, l'élément d'étanchéité (3) étant déformé élastiquement,
**caractérisé en ce que**, par l'application de l'élément d'étanchéité (3) contre la partie de base (2), un espace fermé (4) est formé entre la partie de base (2) et l'élément d'étanchéité (3), et du gaz enfermé dans cet espace (4) est comprimé par la déformation élastique de l'élément d'étanchéité (3) pendant le surmoulage.

8. Procédé selon la revendication 7, dans lequel l'élément d'étanchéité (3) est appliqué de manière continue contre deux surfaces coudées l'une par rapport à l'autre de la partie de base (2) et l'élément d'étanchéité (3) est pressé par la déformation élastique pendant le surmoulage dans une cavité (6) d'un outil de moulage par injection (7).

9. Dispositif d'injection de carburant pour un moteur à combustion interne comprenant un élément de construction selon l'une quelconque des revendications 1 à 6.
